Europäisches Patentamt

European Patent Office

Office européen des brevets

(11) Veröffentlichungsnummer: **0 470 357 A1**

## EUROPÄISCHE PATENTANMELDUNG

(21) Anmeldenummer: **91110741.5**

(51) Int. Cl.⁵: **F16C 29/06**

(22) Anmeldetag: **28.06.91**

(30) Priorität: **12.07.90 DE 4022168**

(43) Veröffentlichungstag der Anmeldung:
**12.02.92 Patentblatt 92/07**

(84) Benannte Vertragsstaaten:
**AT BE CH DE DK ES FR GB GR IT LI LU NL SE**

(71) Anmelder: **INA LINEARTECHNIK**
**Schaefflerring**
**W-6650 Homburg(DE)**

(72) Erfinder: **Greiner, Heinz**
**Ouellweg 9**
**W-7333 Ebersbach/Fils(DE)**
Erfinder: **Negele, Richard**
**Hinterer Holzweg 18/1**
**W-7300 Esslingen(DE)**
Erfinder: **Kaiser, Siegmund H.**
**Grünewaldstr. 47**
**W-7440 Nürtingen(DE)**

(74) Vertreter: **Rüger, Rudolf, Dr.-Ing. et al**
**Webergasse 3 Postfach 348**
**W-7300 Esslingen/Neckar(DE)**

(54) **Linearlager.**

(57) Ein Linearlager mit umlaufenden Wälzkörpern (10) weist einen Tragkörper (2) auf, an dem eine geschlossene Bahn ausgebildet ist, auf der sich die Wälzkörper bewegen und die aus einer Last-Laufbahn (8), einer Rückführ-Laufbahn (9) und zwei im wesentlichen U-förmigen Wälzkörper-Umlenkbahnen (19,22) besteht. Für die Wälzkörper sind seitliche Führungsmittel vorgesehen, die über die Länge der Last-Laufbahn und zumindest über einen Teil der anschließenden Umlenkbahnen absatzlos durchgehend ausgebildete, homogene seitliche Leitwände (37) für die Wälzkörper aufweisen.

Fig. 1

EP 0 470 357 A1

Die Erfindung betrifft ein Linearlager mit umlaufenden Wälzkörpern, mit einem Tragkörper, an dem jeweils paarweise einander zugeordnete, von seitlichen Führungsmitteln begrenzte Laufbahnen ausgebildet sind, auf denen sich die Wälzkörper bewegen und von denen eine, die Last-Laufbahn, den tragenden Wälzkörpern zugeordnet ist und die andere, die Rückführ-Laufbahn, zur Rückführung der unbelasteten Wälzkörper eingerichtet ist und die beide endseitig durch im wesentlichen U-förmige Wälzkörper-Umlenkbahnen unter Ausbildung einer geschlossenen Bahn miteinander verbunden sind.

Linearlager dieser Art sind in vielfältigen Ausführungsformen bekannt. Die Wälzkörper können Kugeln, Rollen oder Tonnen etc. sein, die unmittelbar hintereinanderliegend auf der Last-Laufbahn eine Drucksäule bilden, doch sind auch Ausführungsformen gebräuchlich, bei denen die Wälzkörper durch besondere Maßnahmen im gegenseitigen Abstand gehalten sind. Dies kann beispielsweise in der Art geschehen, daß die endseitig Lagerzapfen tragenden rollenförmigen Wälzkörper an ihren Lagerzapfen in Kettengliedern gelagert sind, so daß sich insgesamt ein zusammenhängendes endloses Gebilde nach Art einer "Zugkette" ergibt. Grundsätzlich gilt für diese Linearlager, daß die Wälzkörper auf den Laufbahnen seitlich sehr genau zu führen sind, weil sie sonst sich gegenseitig verklemmen oder bei Wälzkörpern in Gestalt von Rollen sich verkanten oder Taumelbewegungen ausführen. Derartige Erscheinungen führen zu rauhem Lauf, zum Auftreten von Vibrationen und von sogenannten Stick-Slip-Effekten etc., die darüber hinaus einen erhöhten Verschleiß zur Folge haben und damit die Lebensdauer des Linearlagers herabsetzen.

Aus Herstellungsgründen ist es in der Regel erforderlich, die endseitig der Last-Laufbahn angeordneten Wälzkörper-Umlenkungen als getrennte Teile herzustellen, die an dem Tragkörper befestigt sind und die Umlenkbahnen für die Wälzkörper aufweisen. Um die Wälzkörper auf der im wesentlichen U-förmigen Umlenkbahn zu führen, sind dabei häufig mehrteilige Umlenkeinrichtungen nötig, deren Einzelteile durch Spannbügel und dergl. zusammengehalten werden. Wegen ihrer komplizierten Form werden die Teile durchweg nicht aus dem gleichen Material (in der Regel Stahl) wie der Tragkörper hergestellt; es werden vielmehr gut formbare und kostengünstigere Materialien verwendet, wie Aluminium, Kunststoff, Messing etc.

Beispielsweise von erhöhten Betriebstemperaturen herrührende thermische Zustandsänderungen können nun Verschiebungen und unterschiedliche Längenänderungen dieser Teile der Umlenkeinrichtungen untereinander sowie im Vergleich zu dem Tragkörper zur Folge haben, mit dem Ergebnis, daß die sehr engen Toleranzen, die für eine einwandfreie seitliche Führung der Wälzkörper unerläßlich sind, mit den geschilderten nachteiligen Auswirkungen überschritten werden. Da die Umlenkeinrichtungen stirnseitig an den Tragkörper angesetzt sind und somit ihre Trennfläche zu dem Tragkörper unmittelbar am Ende der Last-Laufbahn liegt (vergl. bspw. Fig. 6 der DE-PS 33 03 832), liegt die Übergangsstelle zwischen der Last-Laufbahn und der Umlenk-Laufbahn an einer an sich sehr ungünstigen Stelle, an der die bspw. von der Last-Laufbahn ablaufenden Wälzkörper entlastet werden und dabei eine gewisse elastische Verformung erleiden. Wegen der engen Tolerierung der Seitenführung der Wälzkörper erfordern diese Linearlager deshalb einen verhältnismäßig hohen Herstellungsaufwand, der gegebenenfalls ein Nacharbeiten nach der Montage im Bereiche der Wälzkörper-Umlenkungen nötig macht.

Aufgabe der Erfindung ist es, hier abzuhelfen und ein Linearlager zu schaffen, das sich bei geringem Herstellungsaufwand durch eine einwandfreie seitliche Führung der Wälzkörper auszeichnet.

Zur Lösung dieser Aufgabe ist das eingangs genannte Linearlager erfindungsgemäß dadurch gekennzeichnet, daß die Führungsmittel über die Länge der Last-Laufbahn und zumindest über einen Teil der anschließenden Umlenkbahnen absatzlos durchgehend ausgebildete, homogene, seitliche Leitwände für die Wälzkörper aufweisen.

Dadurch wird erreicht, daß die Wälzkörper in dem kritischen Bereich beim Austritt und beim Eintritt in die Last-Laufbahn seitlich exakt geführt sind, und zwar unabhängig von Änderungen der Betriebstemperatur oder anderen, das Linearlager beeinflussenden Faktoren. Die seitliche Führung der Wälzkörper ist in diesen Bereichen "stoßfrei", so daß ein Verkanten oder Verklemmen der Wälzkörper sicher vermieden ist.

Die homogenen Leitwände können mit Vorteil bis zum Ende der Umlenkbahnen absatzlos durchgehend ausgebildet sein, so daß sie den ganzen U-förmigen Bogen der Umlenkbahnen bekleiden. Abhängig von der Lagerkonstruktion sind aber auch Ausführungsformen denkbar, bei denen die Leitwände sich lediglich über einen Teil der Umlenkbahnen erstrecken, der aber in jedem Fall so lang bemessen sein muß, daß in dem kritischen Bereich eine sichere, engtolerierte seitliche Führung der Wälzkörper gewährleistet bleibt.

Die homogenen Leitwände können im übrigen ebenflächig oder mit ihrem Querschnittsprofil der Formgestalt der Wälzkörper angepaßt oder auch U-förmig ausgebildet sein. Welche Ausbildung im Einzelfall bevorzugt wird, hängt von der Art der verwendeten Wälzkörper (Kugel, Rolle etc.) und der speziellen Lagerkonstruktion ab. Generell kann gesagt werden, daß ebene Leitflächen sich durch besonders einfache Herstellungsbedingungen auszeichnen, während profilierte Leitflächen den Vorteil mit sich bringen, daß sie gleichzeitig die Wälzkörper unverlierbar haltern.

Mit Vorteil können die homogenen Leitwände aus Metall bestehen, doch können sie in Einzelfällen auch aus Kunststoff hergestellt sein, wobei in beiden Fällen die Möglichkeit besteht, erforderlichenfalls die Leitwände zumindest bereichsweise mit einer verschleiß- oder reibungsmindernden Beschichtung zu versehen.

Bei einer zweckmäßigen Linearlagerkonstruktion kann die Anordnung derart getroffen sein, daß die homogenen Leitwände an schalen- oder bügelförmigen - mit Vorteil im wesentlichen C- oder U-förmigen - Teilen ausgebildet sind, die mit dem Tragkörper verbunden sind.

In einer anderen vorteilhaften Ausführungsform können die homogenen Leitwände auch an Leitblechen ausgebildet sein, die zumindest über die Länge der Last-Laufbahn seitlich zwischen den Wälzkörpern und einer äußeren Abstützung des Tragkörpers oder eines mit diesem verbundenen Teiles liegen. Diese Leitflächen können an dem Tragkörper schwimmend gelagert sein, es sind aber auch Ausführungsformen denkbar, bei denen die Leitfläche zumindest im Bereiche der Umlenkbahnen fest eingespannt sind.

Optimale Führungsverhältnisse für die Wälzkörper lassen sich erzielen, wenn sich die Leitflächen jeweils über die gesamte Länge der Last und Rückführlaufbahn sowie der Umlenkbahnen erstrekken.

Dazu können die Leitflächen mit einer länglichen Öffnung ausgebildet sein, mit der sie auf einem zumindest die Last-Laufbahn tragenden Steg des Tragkörpers aufgesetzt sind. Aus Montagegründen können sie an einer außerhalb der Last-Laufbahn liegenden unkritischen Stelle durchgetrennt sein. Die Leitflächen sind derart ausgebildet, daß sie zumindest im Bereiche der Last-Laufbahn den Wälzkörperdurchmesser nicht überragen. Abhängig von der Gestaltung des Linearlagers kann es aber von Vorteil sein, die Leitfläche im Bereiche der Umlenkbahnen über die Wälzkörper radial vorragend auszubilden, um damit die seitliche Führung der Wälzkörper in den Umlenkbereichen - und gegebenenfalls im Bereiche der Rückführ-Laufbahn - zu verbessern und gleichzeitig eine seitliche Abdeckung der Wälzkörper zu bewirken.

Die Leitflächen selbst können ebenflächig oder profiliert (bspw. U-förmig oder der Formgestalt der Wälzkörper angepaßt) ausgebildet sein; sie können dann auch eine mehr schienenförmige Gestalt annehmen.

Die Rückführ-Laufbahn für die Wälzkörper kann in Gestalt einer offenen Nut des Tragkörpers ausgebildet sein, doch kann es mit Rücksicht auf eine geschlossene Bauart des Linearlagers auch zweckmäßig sein, die Rückführungs-Laufbahn durch eine Bohrung des Tragkörpers verlaufen zu lassen. In diesem Falle kann die Anordnung auch derart getroffen sein, daß die Leitflächen durch diese Bohrung sich erstrecken, was den Vorteil mit sich bringt, daß an die Herstellungsgenauigkeit der Bohrung keine besonderen Anforderungen gestellt werden, weil die seitliche Führung der Wälzkörper eben durch die Leitfläche erfolgt.

Besondere Vorteile bieten die Leitflächen bei der Montage der Wälzkörper, weil sie beim Einführen der Wälzkörpersäule bzw. der eingangs erwähnten Wälzkörper-Zugkette eine Führung ergeben, so daß bspw. keine zusätzlichen Montageführungseinrichtungen erforderlich sind, wenn die Wälzkörper aus Magazinen (Köchern) eingeführt werden. Damit eröffnet sich auch die Möglichkeit einer einfachen automatischen Montage der Wälzkörper, wie auch ein Auswechseln der Wälzkörper oder der Wälzkörper-Zugkette ohne Schwierigkeiten möglich ist; deren Montage kann sogar beim Anwender erfolgen, wobei Maßsortierungen es gestatten, die Vorspannung zu bestimmen, mit der die Wälzkörper geführt sind.

In der Zeichnung sind Ausführungsbeispiele des Gegenstandes der Erfindung dargestellt. Es zeigen:

Fig. 1  ein Linearlager gemäß der Erfindung, in einer ersten Ausführungsform, in perspektivischer, teilweise aufgeschnittener bzw. demontierter Darstellung, unter zusätzlicher Veranschaulichung der Einzelteile einer Wälzkörper-Umlenkeinrichtung,

Fig. 2  das Linearlager nach Fig. 1, geschnitten längs der Linie II-II der Fig. 1, in einer Seitenansicht und in einem anderen Maßstab,

Fig. 3  ein Leitblech des Linearlagers nach Fig. 1, in einer Draufsicht und in einem anderen Maßstab,

Fig. 4  ein Linearlager gemäß der Erfindung, in einer zweiten Ausführungsform und in einer Darstellung entsprechend Fig. 1,

Fig. 5  einen Ausschnitt aus der Rückführ-Laufbahn der Fig. 4 an der Stelle V der Fig. 4, im Schnitt und in einem anderen Maßstab,

Fig. 6  die Einzelheit nach Fig. 5, in einer abgewandelten Ausführungsform und in einer entsprechenden Darstellung,

Fig. 7  ein Linearlager gemäß der Erfindung, in einer dritten Ausführungsform, in perspektivischer Darstellung, im auseinandergenommenen Zustand,

Fig. 8  das Linearlager nach Fig. 7, in perspektivischer Darstellung, im zusammengebauten Zustand,

Fig. 9 ein Linearlager gemäß der Erfindung, in einer fünften Ausführungsform, in perspektivischer Darstellung, teilweise aufgeschnitten und demontiert, und

Fig.10 einen Ausschnitt aus dem Tragkörper des Linearlagers nach Fig. 9 zur Veranschaulichung einer Rückführ-Laufbahn.

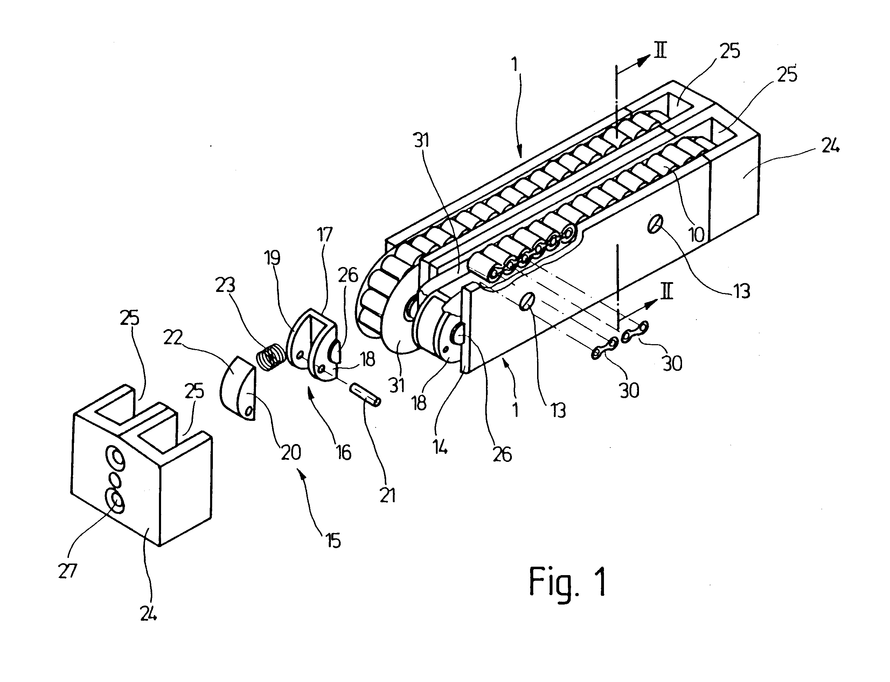

Das in den Fig. 1 bis 3 dargestellte Linearlager ist ein Doppellager, das aus zwei gleichgestalteten Linearlagereinheiten 1 besteht, die breitseitig aneinander befestigt sind oder alternativ einheitlich entsprechend ausgebildet sind.

Es genügt deshalb,lediglich eine der Linearlagereinheiten 1 zu beschreiben:

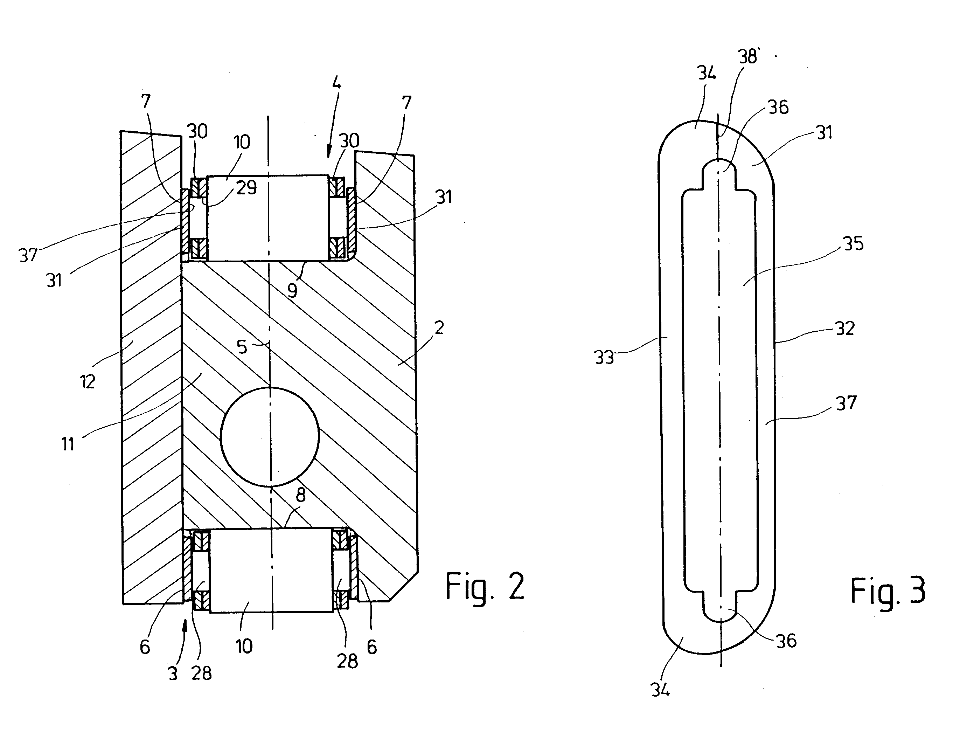

Die Linearlagereinheit 1 weist einen länglichen, im Querschnitt im wesentlichen rechteckigen, parallelflankig begrenzten Tragkörper 2 (Fig. 2) auf, der aus Stahl hergestellt und auf seinen gegenüberliegenden Schmalseiten mit zwei parallelen Längsnuten 3,4 versehen ist, deren gemeinsame Symmetrieebene mit 5 bezeichnet ist. Die gleichgestalteten Längsnuten 3,4 sind jeweils durch parallele Seitenwände 6 bzw. 7 begrenzt, zwischen denen sich jeweils eine ebene Bodenwand 8 bzw. 9 erstreckt, die eine Laufbahn für in Gestalt von zylindrischen Rollen 10 ausgebildete Wälzkörper bildet.

Die Tiefe der (in Fig. 1,2 unteren) Längsnut 6 ist kleiner als der Durchmesser der Rollen 10, so daß sich der Tragkörper 2 über seine zugeordnete Laufbahn 8 und die in der Längsnut 6 befindliche Rollensäule gegen eine nicht weiter dargestellte Führungsschiene abstützen kann, auf der diese tragenden Rollen 10 laufen. Die den tragenden Rollen 10 zugeordnete Laufbahn ist deshalb im weiteren als Last-Laufbahn bezeichnet.

Die gegenüberliegende Längsnut 9 ist tiefer als der Durchmesser der Rollen 10, die damit innerhalb des Umrisses des Tragkörpers 2 liegen, wie dies aus Fig. 2 ersichtlich ist. Sie dient der Rückführung der unbelasteten Rollen 10; ihre Laufbahn ist deshalb im weiteren als Rückführ-Laufbahn bezeichnet.

Zwischen der Last-Laufbahn 8 und der Rückführ-Laufbahn 9 erstreckt sich ein stegartiger Teil 11 des im Querschnitt etwa doppel-T-förmigen Tragkörpers 2.Zwei Nutenseitenwände 6,7 sind an einer ebenen Platte oder Schiene 12 ausgebildet, die mit dem Steg 11 mittels Schrauben 13 (Fig. 1) verschraubt ist. Alternativ könnte der Tragkörper 2 auch einstückig ausgebildet sein.

An den gegenüberliegenden,parallelen, ebenen Stirnflächen 14 des Tragkörpers 2 sind Umlenkeinrichtungen 15 (Fig. 1) für die Rollen 10 angeordnet. Jede dieser Umlenkeinrichtungen 15 besteht aus einem im Querschnitt etwa U-förmigen Lagerstück 16, das mit einer ebenen Grundfläche 17 auf der Stirnfläche 14 des Tragkörpers 4 aufgesetzt ist und zwei parallele Wangen 18 aufweist, deren Umfangsflächen 19 auf einem gemeinsamen gedachten Zylinder liegen. Zwischen den beiden Wangen ist ein Formstück 20 um einen parallel zu den Laufbahnen 8,9 verlaufenden Lagerstift 21 schwenkbar gelagert, der in entsprechende Bohrungen der Wangen 18 eingefügt ist. Das Formstück 20 weist eine im wesentlichen zylindrische Außenfläche 22 auf; es ist gegen das Lagerstück 16 über eine dazwischen gefügte Druckfeder 23 abgestützt, die bestrebt ist, das Formstück 20, bezogen auf Fig. 1, im Gegenuhrzeigersinn um den Lagerstift 21 zu verschwenken.

Die Außenfläche 22 des Formstücks 20 verbindet gemeinsam mit den Umfangsflächen 19 des Lagerstückes 16 auf beiden Seiten des Tragkörpers 2 jeweils die beiden Laufbahnen 8,9 miteinander, so daß sich insgesamt eine geschlossene Laufbahn ergibt, auf der die Rollen 10 umlaufen.

Eine für beide Linearlagereinheiten 1 gemeinsame Umlenkhaube 24, die für jede Linearlagereinheit 1 mit einer parallelflankig begrenzten Führungsnut 25 ausgebildet ist, deren Breite jener der Längsnuten 3,4 entspricht, ist auf die jeweilige Stirnfläche 14 des Tragkörpers 2 aufgesetzt; sie nimmt in ihrer jeweiligen Führungsnut 25 eine Umlenkeinrichtung 15 auf, wobei sie gleichzeitig das Lagerstück 16 mittels angeformter Zapfen 26 an der Stirnfläche 14 des Tragkörpers 2 lagerichtig fixiert. Zu ihrer Befestigung an dem Tragkörper 2 dienen nicht weiter dargestellte Senkschrauben, die durch entsprechende Schraubenlöcher 27 ragend in Gewindebohrungen des Tragkörpers 2 eingeschraubt sind.

Die Rollen 10 sind beidseitig mit koaxialen,zylindrischen Lagerzapfen 28 (Fig. 2) ausgebildet, mittels derer sie in entsprechenden Lagerbohrungen 29 von Kettengliedern 30 (Fig. 1) drehbar gelagert sind, die die Rollen 10 zu einer endlosen "Zugkette" miteinander verbinden, in der benachbarte Rollen 10 im Abstand zueinander stehen.

Um eine einwandfreie Führung der auf der erwähnten geschlossenen Laufbahn umlaufenden Rollen 10 zu gewährleisten und insbesondere ein Verkanten oder eine Taumelbewegung der Rollen beim Ablaufen von der Last-Laufbahn 8 zu verhüten, sind die Rollen 10 durch besondere Führungsmittel seitlich geführt. Diese seitlichen Führungsmittel weisen zwei ebenflächige Leitbleche 31 auf, deren Gestalt insbesondere aus Fig. 3 zu ersehen ist. Jedes der länglichen Leitbleche 31 ist mit zwei parallelen Führungsstegen 32, 33 ausgebildet, die an beiden Enden durch zwei im wesentlichen U-förmige Umlenkabschnitte 34 miteinander verbunden sind, derart, daß das Leitblech mit einer rechteckigen Öffnung 35 versehen ist, an die sich zwei gegenüberliegende Aussparungen 36 anschließen.

Die pro Linearlagereinheit 1 vorgesehenen beiden Leitbleche 31 sind mit ihren Öffnungen 35 auf den Steg 11 des Tragkörpers 2 aufgesetzt, wobei ihre Aussparungen 36 die Zapfen 26 der Lagerstücke 16 umgreifen.Die Dicke der Leitbleche 31 ist derart bemessen, daß sie auf ihrer Außenseite von den Längsnuten-Seitenwänden 6,7 abgestützt, die Rollen 10 über die Stirnseiten deren Lagerzapfen 28 seitlich engtoleriert führen. Sie bilden auf ihrer Innenseite 37 (Fig. 2) homogene seitliche Leitwände, die sich mit dem Steg 32 über die gesamte Länge der Last-Laufbahn 8, mit dem Steg 33 ebenfalls über die gesamte Länge der Rückführ-Laufbahn 9 und mit den Umlenkabschnitten 34 über die Länge der U-förmigen Umlenkbahnen im Bereiche der Umfangsflächen 19,der Lagerstücke 16, sowie der Außenfläche 22 der Formstücke 20 absatzlos durchgehend erstrecken. Die Höhe der Stege 32, 33 ist kleiner als der Durchmesser der Rollen 10, so daß die Leitbleche 31 im Bereiche der Laufbahnen 8,9 nicht über die Rollen 10 vorstehen. Die Umlenkabschnitte 34 sind aber derart bemessen, daß sie im Bereiche der Umlenkeinrichtungen 15 in der aus Fig. 1 links ersichtlichen Weise radial über die Rollen 10 vorragen; sie liegen in diesem Bereich innerhalb der Führungsnuten 25 der Umlenkhaube 27, mit dem Ergebnis, daß die Rollen 10 auch in den Umlenkbereichen einwandfrei engtoleriert seitlich geführt bleiben.

Da die den Rollen 10 zugewandten Leitflächen 37 der Leitbleche 31 keinerlei Absätze aufweisen und die Leitbleche selbst einheitlich homogen aus Stahlblech gestanzt sind, können sich die Rollen 10 insbesondere auch in den kritischen Bereichen beim Austritt aus der Last-Laufbahn 8 nicht verhaken oder verkanten,und zwar unabhängig von Änderungen der Betriebstemperatur des Linearlagers oder von dessen schwankender Belastung.

Die Leitbleche 31 sind zweckmäßigerweise aus Stahlblech mit hoher Oberflächengüte im Bereiche der Leitflächen 37 hergestellt; sie können aber auch aus Kunststoffmaterial bestehen und unabhängig von der Materialwahl mit einer Beschichtung aus einem verschleiß- und reibungsmindernden Material versehen sein.

Bei Ausführungsformen, bei denen der Tragkörper 2 einstückig ausgebildet ist, sind die Tragbleche 31 längs einer Schnittkante 38 (Fig. 3) durchgetrennt, so daß mit ihrer Öffnung 35 auf den Steg 11 aufgesetzt werden können. Die Schnittkante 38 liegt in einem unkritischen Teil eines Umlenkbereiches, in dem die Rollen 10 entlastet sind, so daß sich insoweit keine Beeinträchtigung der seitlichen Rollenführung ergibt.

Erforderlichenfalls können die Leitbleche 31 auf ihrer Leitfläche nachbearbeitet und damit auf engste Toleranzen eingestellt werden. Insbesondere wenn sie aus Stahlblech bestehen, haben sie nahezu das gleiche thermische Verhalten wie der aus Stahl bestehende Tragkörper 2.

Auch geringe Längenänderungen der aus den Kettengliedern 30 und den Rollen 10 gebildeten "Zugkette" haben auf die seitliche Führung der Rollen 10 keinen Einfluß. Die Zugkette wird durch die Druckfedern 23 und die Formstücke 22 jeweils unter Spannung gehalten. Da die Umlenkabschnitte 34 der Leitbleche 31 im Bereiche der Umlenkeinrichtungen 15 radial über die Rollen 10 vorstehen, sind immer einwandfreie seitliche Führungsverhältnisse gewährleistet.

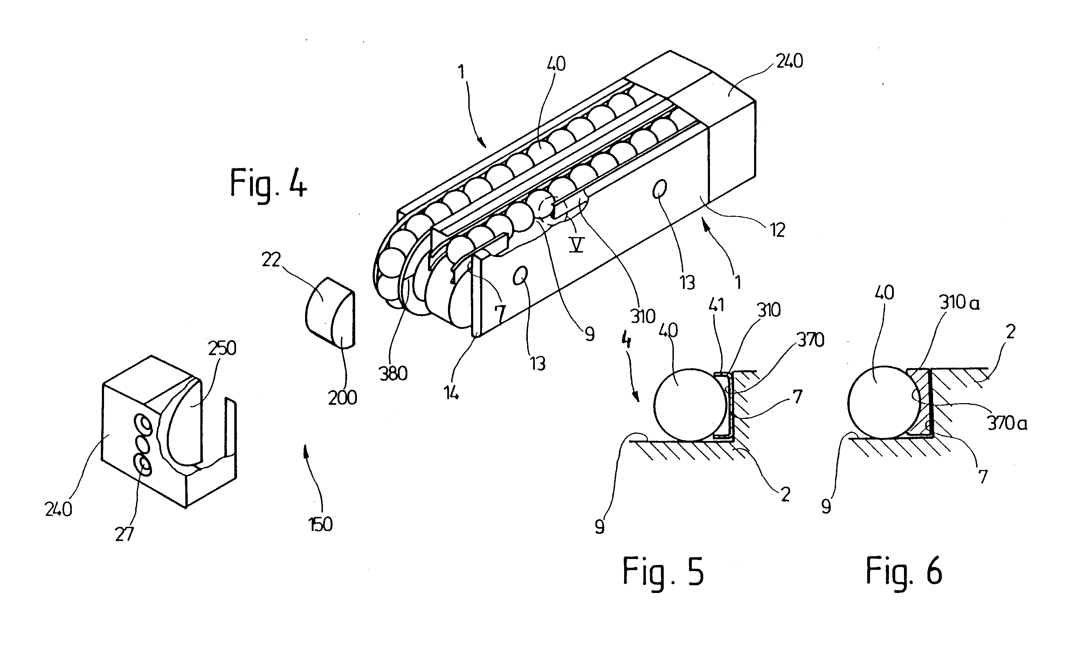

Die in den Fig. 4,5 dargestellte zweite Ausführungsform eines neuen Linearlagers entspricht in wesentlichen Teilen der anhand der Fig. 1 bis 3 beschriebenen ersten Ausführungsform. Gleiche Teile sind deshalb mit gleichen Bezugszeichen bezeichnet und nicht nochmals erläutert.

Abweichend von der Ausführungsform nach den Fig. 1 bis 3 sind die Wälzkörper bei dieser Ausführungsform durch Kugeln 40 gebildet. Die Kugeln 40 laufen wieder in den parallelflankig begrenzten Längsnuten des Tragkörpers, dessen Querschnittsgestalt Fig. 2 entspricht. Von den Längsnuten ist in den Fig. 4,5 lediglich die die Rückführ-Laufbahn 9 enthaltende obere Längsnut 4 sichtbar.

Die beidseitig an die Stirnflächen 14 des Tragkörpers angesetzte Umlenkeinrichtung 150 weist ein Formstück 200 auf, das ungefedert auf dem Tragkörper sitzt und auf diesem wiederum durch die Umlenkhaube 240 lagefest fixiert ist.

Die seitlichen Führungsmittel für die Kugeln 40 bestehen auch in diesem Falle aus zwei Leitblechen, die mit 310 bezeichnet sind und die in die Längsnuten des Tragkörpers eingesetzt sind, derart, daß sie von den Nutenseitenwänden abgestützt sind, wie dies in Fig. 5 für die obere Längsnut 4 und deren eine Nutenseitenwand 7 veranschaulicht ist.

Die Leitbleche 310 sind schienenartig gekrümmt und weisen über ihre gesamte Länge gleiche Breite auf. Sie liegen auf der Last- und der Rückführ-Laufbahn sowie auf der Außenfläche 22 der Formstücke 200 auf und bewirken damit die Halterung der Formstücke 20. Außerdem sind die Umlenkhauben 240 für jede Linearlagereinheit 1 mit einer taschenförmigen, der Gestalt der Umlenklaufbahn angepaßten Ausnehmung 250 versehen, so daß die Leitbleche 310 bei aufgesetzten Umlenkhauben 240 in den beiden Umlenkbereichen fest eingespannt sind.

Die im Querschnitt U-förmigen Leitbleche 310 bewirken eine exakte seitliche Führung der Kugeln 40 längs der geraden, engtolerierten, seitlichen Leitwand 370. Gleichzeitig sind aber die Kugeln 40 mittels der abgebogenen Flansche 41 unverlierbar gehaltert, so daß zusätzliche Maßnahmen insoweit entbehrlich sind.

Bei der dargestellten Form des Tragkörpers mit abnehmbarer Platte 12 sind die Leitbleche 310 endlos ausgebildet; bei einstückigem Tragkörper sind sie längs einer Schnittkante 380 aufgetrennt, die wiederum in einem unkritischen Teil eines Umlenkbereiches liegt.

Alternativ können die Leitbleche 310 auch in der aus Fig. 6 ersichtlichen Weise abgewandelt sein, in der Leitbleche 310a veranschaulicht sind, die im Bereiche ihrer mit den Kugeln 40 zusammenwirkenden Leitwand 370a der Formgestalt der Kugeln 40 angepaßt sind.

Auch die Leitbleche 310, 310a können aus Stahl, einem anderen Metall oder aus Kunststoffmaterial mit oder ohne Beschichtung hergestellt sein.

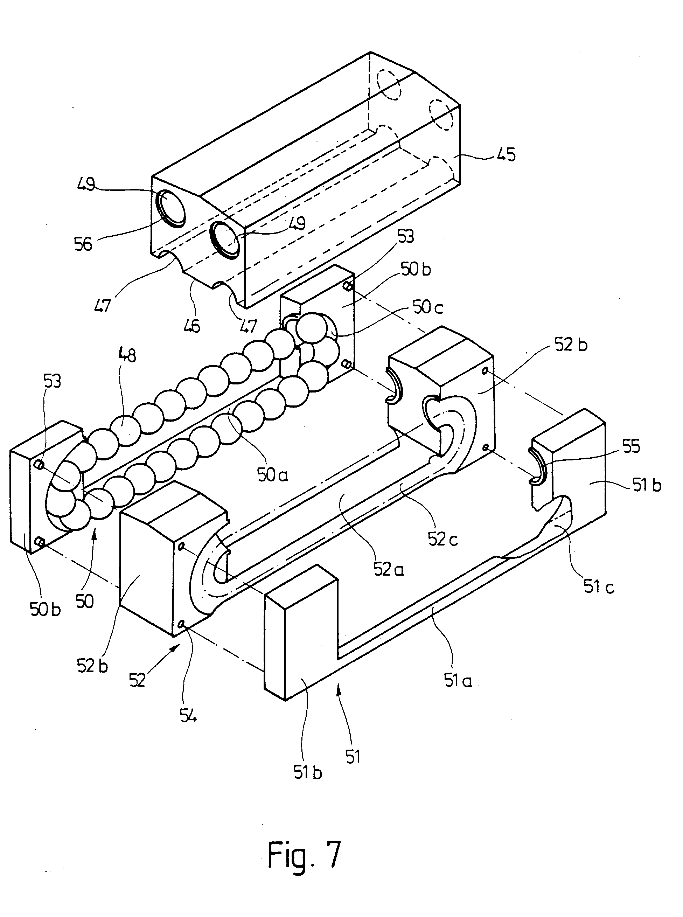

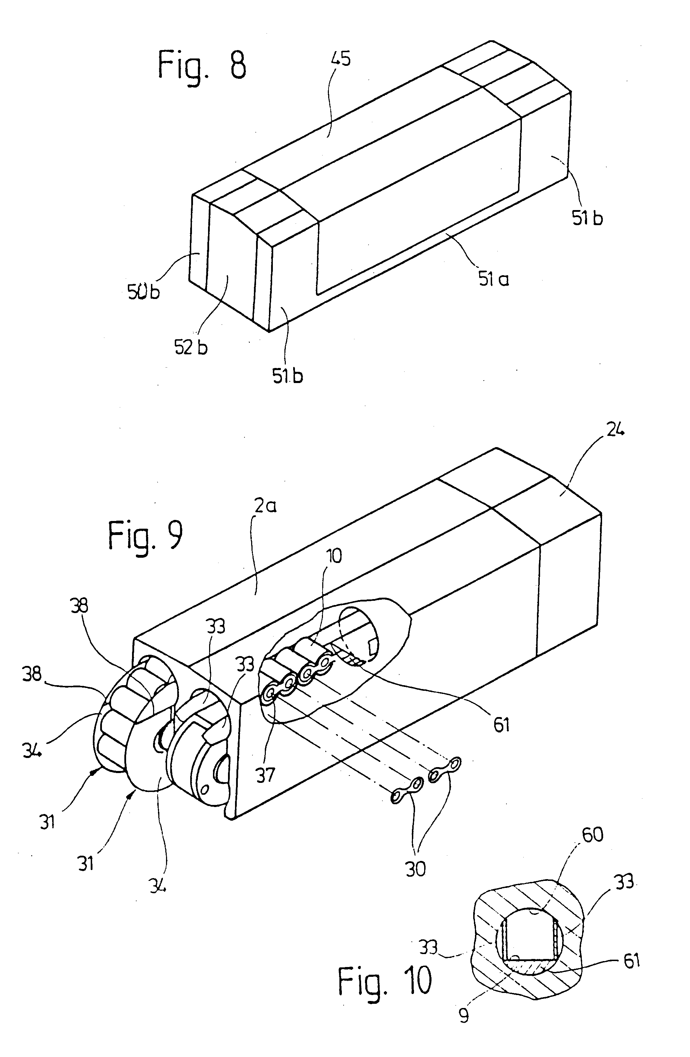

Bei der dritten Ausführungsform des neuen Linearlagers, wie sie in den Fig. 7,8 veranschaulicht ist, ist der Tragkörper mit 45 bezeichnet. Er ist im wesentlichen parallelepipedförmig ausgebildet und weist im Bereiche seiner unteren ebenen Fläche 46 zwei parallele, im Querschnitt etwa teilkreisförmige, rillenartige Last-Laufbahnen 47 auf, auf denen Wälzkörper in Gestalt von Kugeln 48 laufen. Im Abstand oberhalb der Last-Laufbahnen 47 sind in dem Tragkörper 45 zwei parallele, durchgehende Bohrungen 49 vorgesehen, die die Rückführ-Laufbahnen für die Kugeln 48 bilden.

Zur seitlichen Führung der Kugeln 48 dienen drei Führungsteile 50, 51, 52, die jeweils schalen- oder bügelförmig ausgebildet und im wesentlichen U-förmig gestaltet sind. Jedes der Führungsteile 50 bis 52 weist einen stegartigen Teil 50a bzw. 51a bzw. 52a auf, der jeweils zwei im wesentlichen blockartige Schenkel oder Umlenkteile 50 bzw.51b bzw.52b miteinander verbindet. Die Anordnung ist derart getroffen, daß in der aus Fig. 7 ersichtlichen Weise die beiden äußeren Führungsteile 50, 51 mit ebenen Flächen seitlich an das mittlere Führungsteil 52 anschließen und gegenüber diesem mittels Paßstiften 53 und Paßbohrungen 54 exakt lagerichtig fixiert sind.

Im Bereich der einander zugewandten ebenen Seitenflächen der Führungsteile 50 bis 52 sind im Querschnittsprofil im wesentlichen teilkreisförmige, rillenartige Vertiefungen 50c bzw. 51c bzw. 52c ausgebildet, die mit einer im wesentlichen C-förmigen Gestaltung sich über die stegartigen Teile 50a bzw. 51a bzw. 52a und die anschließenden Umlenkteile 50b bzw. 51b bzw. 52b absatzlos erstrekken.

Diese rinnenartigen Vertiefungen 50c bis 52c bilden im zusammengebauten Zustand mit ihrer Wandung die seitlichen Leitwände für die Kugeln 48, die damit über die gesamte Länge der Last-Laufbahnen 47 und der anschließenden, in den Umlenkteilen 50b, 51b, 52b verlaufenden, im wesentlichen U-förmigen Umlenkbahnen absatzlos durch durchgehend homogene Leitwände beidseitig engtoleriert geführt sind.

Die Abmessungen des Tragkörpers 45 und der Führungsteile 50 bis 52 sind derart gewählt, daß in dem in Fig. 8 veranschaulichten zusammengebauten Zustand der Tragkörper 45 genau zwischen die gegenüberliegenden Umlenkteile 50b, 51b, 52b paßt, wobei an diesen im Bereiche der Mündung der rillenartigen Vertiefungen 50c, 51c, 52c vorgesehene kragenartige Fortsätze 55 in entsprechende Ansenkungen 56 der die Rückführ-Laufbahnen 49 bildenden Bohrungen des Tragkörpers 45 eingreifen, so daß ein einwandfreier Übergang der Umlenkbahnen in die Rückführ-Laufbahnen 49 gewährleistet ist. Die Führungsteile 50 bis 52 sind so elastisch, daß sie bei der Montage geringfügig aufgebogen werden können, um das Einsetzen des Tragkörpers 45 zu ermöglichen.

Die in den Fig. 9,10 schließlich noch dargestellte weitere Ausführungsform eines neuen Linearlagers ist eine Abwandlung der Ausführungsform nach den Fig. 1 bis 3. Gleiche Teile sind deshalb wiederum mit gleichen Bezugzeichen versehen und nicht weiter erläutert. Während bei der Ausführungsform nach den Fig. 1 bis 3 die Rückführ-Laufbahn 9 im Boden einer offenen Längsnut 4 ausgebildet ist, verläuft die Rückführ-Laufbahn 9 bei der Ausführungsform nach den Fig. 9,10 jeweils durch eine durchgehende Längsbohrung 60 des Tragkörpers 2a, der im übrigen ansonsten in seinem Querschnitt entsprechend Fig.2 ausgebildet ist. Dadurch wird eine geschlossene Bauweise erreicht.

Zu diesem Zwecke ist in die jeweilige Längsbohrung 60 ein im Querschnitt kreissegmentförmiges, längliches Laufbahnelement 61 eingelegt, das die ebene Rückführ-Laufbahn 9 trägt und an der Bohrungswand satt anliegt. Die oberen Stege 33 (Fig. 3) der beiden Leitbleche 31 sind durch die Längsbohrung 60 durchgeführt, so daß unabhängig von der Bohrungstoleranz auch im Bereiche der Rückführ-Laufbahn 9 eine einwandfreie seitliche Führung der Rollen 10 gewährleistet ist. Die Leitbleche 31 sind zur Ermöglichung der Montage längs der Schnittlinie 38 durchgetrennt, die in diesem Falle in der Verlängerung des oberen Steges 33 angeordnet ist und damit in montiertem Zustand in einem unkritischen Teil des Umlenkbereiches liegt.

Selbstverständlich könnte auch diese Ausführungsform mit Wälzkörpern in Gestalt von Kugeln hergestellt werden, wobei dann die im Querschnitt U-förmig gestalteten oder profilierten Leitbleche 310 bzw. 310a nach den Fig. 5,6 zum Einsatz kämen.

Die im Vorstehenden beschriebenen und in der Zeichnung dargestellten verschiedenen Ausführungsformen von Linearlagern sind durchweg in Gestalt von Doppellagern ausgebildet, bei denen zwei Wälzlagerreihen mit ihren Laufbahnen in parallelen Ebenen liegend im Abstand nebeneinander angeordnet sind. Abgesehen davon, daß - wie bereits erwähnt - die Linearlagereinheiten 1 auch einzeln für sich verwendet werden können, ist die Erfindung grundsätzlich unabhängig von der Form der Führungsschiene und eines auf dieser Führungsschiene über solche Linearlager gelagerten verfahrbaren Schlittens einsetzbar. So kann z.B. der Schlitten eine im Querschnitt im wesentlichen C-förmige Gestalt aufweisen und die zugeordnete Führungsschiene umgreifend ausgebildet sein, wobei er auf der Führungsschiene mittels eines Linearlagers gelagert ist, das Wälzkörperreihen aufweist, deren Laufbahnen in Ebenen liegen, welche jeweils paarweise einen Winkel von bspw. 90° miteinander einschließen (vergl. bspw. DE-PS 33 03 832). Dabei können die Wälzkörper Kugeln, Rollen, Tonnen etc. sein.

**Patentansprüche**

1. Linearlager mit umlaufenden Wälzkörpern, mit einem Tragkörper, an dem jeweils paarweise einander zugeordnete, von seitlichen Führungsmitteln begrenzte Laufbahnen ausgebildet sind, auf denen sich die Wälzkörper bewegen und von denen eine,die Last-Laufbahn, den tragenden Wälzkörpern zugeordnet ist und die andere, die Rückführ-Laufbahn, zur Rückführung der unbelasteten Wälzkörper eingerichtet ist, und die beide endseitig durch im wesentlichen U-förmige Wälzkörper-Umlenkbahnen unter Ausbildung einer geschlossenen Bahn miteinander verbunden sind, dadurch gekennzeichnet, daß die Führungsmittel über die Länge der Last-Laufbahn (9; 47) und zumindest über einen Teil der anschließenden Umlenkbahnen (19, 22; 50 bis 52c) absatzlos durchgehend ausgebildete, homogene, seitliche Leitwände (37; 370, 50c bis 52c) für die Wälzkörper (10; 40, 48) aufweisen.

2. Linearlager nach Anspruch 1, dadurch gekennzeichnet, daß die homogenen Leitwände (50c bis 52c) bis zum Ende der Umlenkbahnen absatzlos durchgehend ausgebildet sind.

3. Linearlager nach Anspruch 1 oder 2, dadurch gekennzeichnet, daß die homogenen Leitwände an schalen- oder bügelförmigen Teilen (50 bis 52) ausgebildet sind, die mit dem Tragkörper (45) verbunden sind.

4. Linearlager nach Anspruch 3, dadurch gekennzeichnet, daß die bügelförmigen Teile (50 bis 52) im wesentlichen C- oder U-förmig ausgebildet sind.

5. Linearlager nach einem der vorhergehenden Ansprüche, dadurch gekennzeichnet, daß die homogenen Leitwände (37) eben ausgebildet sind.

6. Linearlager nach einem der Ansprüche 1 bis 5, dadurch gekennzeichnet, daß die homogenen Leitwände (370) zumindest im Bereiche der Wälzkörper (40) im Querschnitt U-förmig ausgebildet sind.

7. Linearlager nach einem der Ansprüche 1 bis 5, dadurch gekennzeichnet, daß die homogenen Leitwände (370a) mit ihrem Querschnittsprofil der Formgestalt der Wälzkörper (40) angepaßt ausgebildet sind.

8. Linearlager nach einem der vorhergehenden Ansprüche, dadurch gekennzeichnet, daß die homogenen Leitwände aus Metall bestehen.

9. Linearlager nach einem der Ansprüche 1 bis 8, dadurch gekennzeichnet, daß die homogenen Leitwände aus einem Kunststoff bestehen.

10. Linearlager nach einem der vorhergehenden Ansprüche, dadurch gekennzeichnet, daß die homogenen Leitwände zumindest bereichsweise mit einer verschleiß- oder reibungsmindernden Beschichtung versehen sind.

11. Linearlager nach Anspruch 1, dadurch gekennzeichnet, daß die homogenen Leitwände (37; 370) an Leitblechen (31, 310) ausgebildet sind, die zumindest über die Länge der Last-Laufbahn (9) seitlich zwischen den Wälzkörpern (10) und einer äußeren Abstützung (6,7) des Tragkörpers (2) oder eines mit diesem verbundenen Teiles liegen.

12. Linearlager nach Anspruch 11, dadurch gekennzeichnet, daß die Leitbleche (31) an dem Tragkörper (2) schwimmend gelagert sind.

13. Linearlager nach Anspruch 11, dadurch gekennzeichnet, daß die Leitbleche (310) zumindest im Bereiche der Umlenkbahnen fest eingespannt sind.

14. Linearlager nach einem der Ansprüche 11 bis 13, dadurch gekennzeichnet, daß die Leitbleche (31, 310) sich jeweils über die gesamte Länge der Last- und der Rückführ-Laufbahn (8,9) sowie der Umlenkbahnen (22,19) erstrekken.

15. Linearlager nach einem der Ansprüche 11 bis 14, dadurch gekennzeichnet, daß die Leitbleche (31, 310) mit einer länglichen Öffnung (35) ausgebildet sind, mit der sie auf einen zumindest die Last-Laufbahn (8) tragenden Steg (11) des Tragkörpers (2) aufgesetzt sind.

16. Linearlager nach Anspruch 15, dadurch gekennzeichnet, daß die Leitbleche (31, 310) an einer außerhalb der Last-Laufbahn (8) liegenden Stelle (38) durchgetrennt sind.

17. Linearlager nach einem der vorhergehenden Ansprüche, dadurch gekennzeichnet, daß die Rückführ-Laufbahn (49; 60) durch eine Bohrung des Tragkörpers (45, 2a) verläuft.

18. Linearlager nach den Ansprüchen 11 und 18, dadurch gekennzeichnet, daß die Leitbleche (31) durch die Bohrung (60) verlaufen.

19. Linearlager nach einem der vorhergehenden Ansprüche, dadurch gekennzeichnet, daß die Wälzkörper Rollen (10) sind, die durch Kettenglieder (30) miteinander verbunden sind.

Fig. 1

Fig. 3

Fig. 2

Fig. 4

Fig. 5

Fig. 6

Fig. 7

Fig. 8

45

50 b

52 b

51 b

51 a

51 b

Fig. 9

2a

10

24

38

38

33

33

34

31

31

34

37

61

30

60

33

33

61

9

Fig. 10

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-3 304 133  (M. STRASSBERG)<br>* Spalte 3, Zeile 21 - Spalte 4, Zeile 70; Figur 1 *<br>– – – | 1-8 | F 16 C 29/06 |
| X | EP-A-0 318 980  (TSUBAKIMOTO PRECISION PRODUCTS CO. LTD.)<br>* Spalte 5, Zeile 41 - Spalte 7, Zeile 47; Figuren 2,7,9,12 *<br>– – – | 1,2 | |
| A | DE-A-3 104 825  (INDUSTRIEWERK SCHAEFFLER OHG)<br>– – – | | |
| A | EP-A-0 332 358  (THOMSON INDUSTRIES)<br>– – – | | |
| A | EP-A-0 164 540  (TSUBAKIMOTO PRECISION PRODUCTS CO.)<br>– – – – – | | |

**RECHERCHIERTE SACHGEBIETE (Int. Cl.5)**

F 16 C

Der vorliegende Recherchenbericht wurde für alle Patentansprüche erstellt

| Recherchenort | Abschlußdatum der Recherche | Prüfer |
|---|---|---|
| Berlin | 07 November 91 | HOFFMANN M.P. |